# EUROPEAN PATENT APPLICATION

(11) **EP 2 703 185 A1**
(43) Date of publication of application: **05.03.2014**
(21) Application number: 13182336.1
(22) Date of filing: 30.08.2013
(51) Int. Cl.: B60B 29/00, B66F 9/08

(54) **Wheel lifting device for handling of tires**

(30) Priority: 03.09.2012 DK 201270531
(71) Applicant: Hovmand A/S, 4180 Soro (DK)
(72) Inventor: Hovmand, Søren, 2500 Valby (DK); Nimgaard, Lars Sargent, 4600 Køge (DK); Laugesen, Leif Verner, 4180 Sorø (DK)
(74) Representative: Nielsen, Leif

(57) **Abstract**

The invention relates to a wheel lifting device for handling wheels, where the device comprises a transport frame (1) provided with means for moving the wheel lifting device along a surface and wherein the transport frame further comprises a raising bar (7) mounted to the frame (1) and extending vertically upwards from the frame (1), and a lifting unit (9) mounted to the raising bar (7) for sliding upwards and downwards along the raising bar (7), where the lifting unit (9) comprises at least three elongated bars (8) extending in a direction substantially perpendicular to the raising bar (7), and wherein the distance between each elongated bar (8) introduces a gap for supporting a standing wheel. The invention greatly facilitates the process of aligning the wheel while lifting, whereby mounting holes in the rim are aligned to bolts in the hub, a process that can often be quite difficult and cumbersome.

## Description

### Field of the Invention

The present invention relates to a wheel lifting device for handling of wheels.

### Background of the Invention

In the present application the term wheel is used for vehicle tires with or without rim. Examples of vehicles are automobiles, motorcycles, buses, tractors and trucks.

Wheels often have to be removed and replaced on a vehicle, e.g. for repair of the wheel or for replacement of a tire with a newer tire or for repairing elements of the car only accessible when the wheel is removed, such as the brakes. In some countries it is recommended or even a requirement to use special tires in the winter. These tires may be optimal for snow, ice and/or cold conditions, but less optimal for dry, wet and/or warm conditions. Therefore there is a requirement for storing the wheels in the season in which they are not in use. At the end of each season the wheels in use need replacement with the wheels in storage. The wheels may be collected from storage and moved to the vicinity of the car for replacement and then each wheel is replaced by removing the wheel-fixing bolt, lifting the wheel from the hub, positioning the new wheel and fastening the wheel fixing bolts again.

Wheels can be quite heavy and very difficult to handle, and therefore the process of replacing a wheel is hard work for the person performing the process, since the wheel to be removed needs to be manually lifted from the hub to the storage, and the new wheel to be mounted on the axle needs to be lifted from the storage and aligned and positioned on the axle. Especially the process of aligning the wheel while lifting, whereby mounting holes in the rim are aligned to bolts in the hub, can be quite difficult and cumbersome.

US 2012/0057954 A1 discloses a wheel assembly positioning device. The device includes a wheel assembly cradle that holds a wheel assembly. A lifting device is also included that raises or lowers the wheel assembly cradle in a vertical direction to allow a technician to dismount or mount a wheel assembly to a vehicle. For adjusting the position of the wheel assembly in the horizontal direction the entire wheel assembly positioning device must be moved. The device with the wheel assembly can be heavy and therefore horizontal positioning of the wheel assembly in relation to the hub is cumbersome.

### Object of the Invention

An object of the present invention is to solve the above mentioned problems.

### Description of the Invention

According to the present invention this is achieved by a wheel lifting device comprising a transport frame comprising means for moving said wheel lifting device along a surface, and wherein said transport frame further comprises a raising bar mounted to said frame and extending vertically upwards from said frame, and a lifting unit mounted to said raising bar for sliding upwards and downwards along said raising bar, where the lifting unit comprises at least three elongated bars extending in a direction substantially perpendicular to the raising bar, wherein the distance between each elongated bar introduces a gap for supporting a standing wheel.

When the lifting unit comprises three elongated bars it is possible to support a standing wheel on at least two horizontal positions relative to the lifting unit, which facilitates optimal handling of the wheel by an operator. By these means, the risk of overloading the operators back and shoulders is furthermore reduced.

The lifting unit can lift the wheels from one level to another e.g. from the ground to a position in front of the hub of the car, where the wheel is to be mounted. The lifting unit can further support the wheel while fixing bolts are being mounted for fixing the wheel to the hub.

The distance between the elongated bars could in one embodiment be similar to lifting holes in a tire dolly carrying stables of tires; thereby the wheel lifting device could also be used as a forklift for lifting stables of tires positioned on a dolly.

In an embodiment the lifting unit is shaped as a fork, where said elongated bars are teeth of said fork.

The fork has at least three teeth introducing two resting gaps, but the fork could have further teeth, thereby introducing further resting gaps for carrying a wheel. The wheel can then be moved further to each side introducing a more flexible solution, whereby further flexibility when choosing working position is possible.

In an embodiment at least one of said elongated bars comprises rollers. These rollers could be mounted as tubes around the bars, but alternatively they could also be mounted on the surface of the bars as small wheels.

Thereby it becomes easier to rotate the wheel for aligning mounting holes in the wheel with mounting holes of the hub.

In an embodiment at least one of said elongated bars comprises a rubber sleeve mounted around the elongated bar.

Adding a rubber sleeve means that when using the wheel lifting device as forklift the friction between the dolly and the lifting unit increases, whereby the dolly does not slip of the lifting unit.

### Description of the Drawing

The invention will be explained in more detail below with reference to the accompanying drawing, where:
- Fig. 1: illustrates a wheel lifting device according to the present invention in a front view.
- Fig. 2: illustrates a wheel lifting device according to the present invention in a back view.
- Fig. 3: illustrates a lifting unit of a wheel lifting device according to the present invention.

### Detailed Description of the Invention

In the explanation of the figures identical or corresponding elements will be provided with the same designations in different figures. Therefore no explanation of all details will be given in connection with each single figure/embodiment.

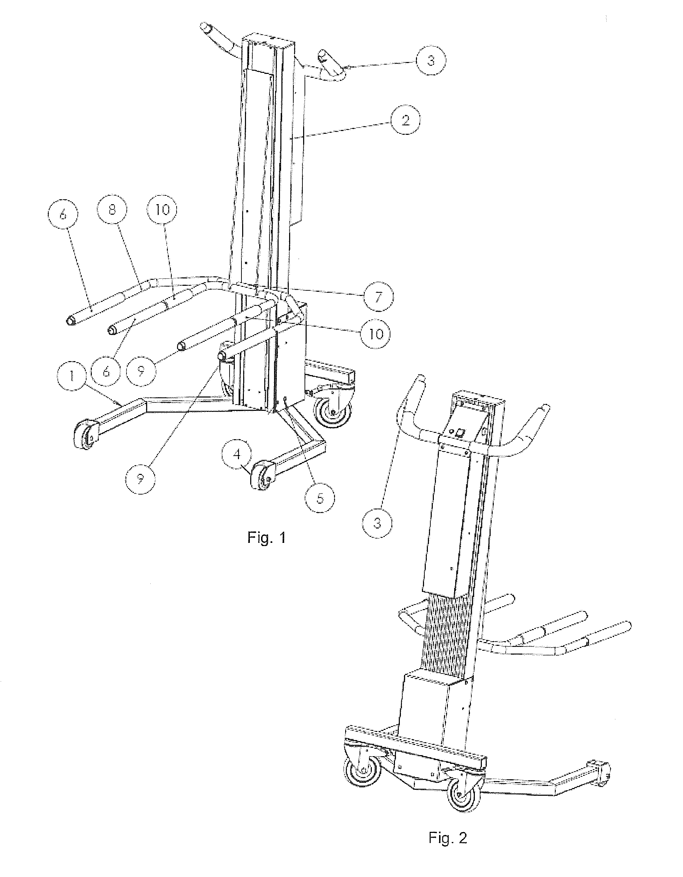

Figs. 1 and 2 illustrate the wheel lifting device according to the present invention in a back and a front view.

The wheel lifting device comprises a transport frame 1 being a base with wheels 4 for moving the lifting device along a surface. The device could in one embodiment be moved manually by pushing and pulling via the handles 3 and thereby rolling the device via the wheels along the surface. In another embodiment the device could be moved via a drive unit connected to the wheels and operated from the control unit 2 of the wheel lifting device.

The wheel lifting device further comprises a raising bar 7 connected to the transport frame 1. A lifting unit 9 is connected to the raising bar 7, and the lifting unit 9 can slide up and down the raising bar 7 for lifting wheels positioned on the elongated bars 8 of the lifting unit 9 up and down. The sliding up and down is performed via a drive unit 5, and the lifting unit 9 can be stopped at any position along the raising bar 7.

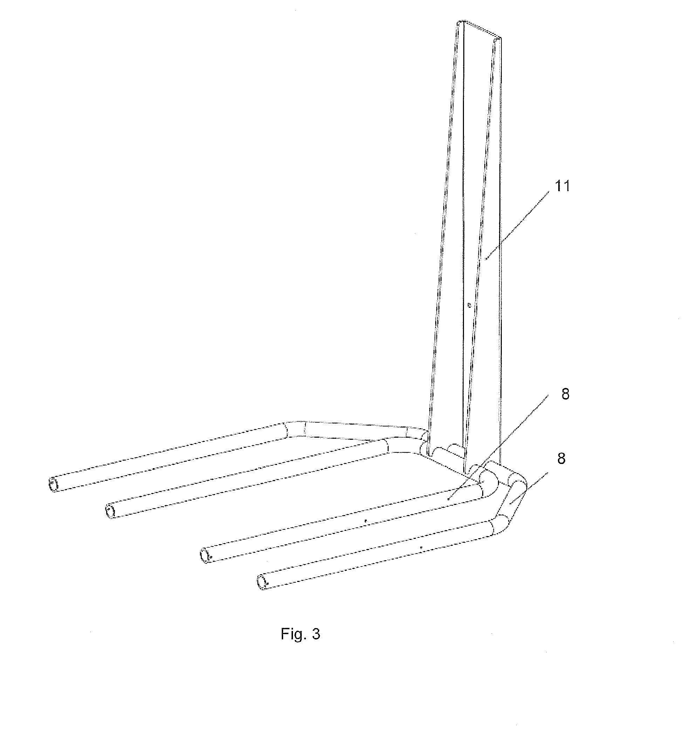

The lifting unit 9 is shaped as a fork having four elongated bars 8 positioned in a distance from each other. Figure 3 illustrates the lifting part of the wheel lifting device having elongated bars 8 connected to a sliding surface 11, the sliding surface 11 for mounting along the raising bar 7 and for sliding up and down the raising bar 7.

During use one or more wheels can be positioned upright on the lifting unit resting in gaps between the elongated bars 8. By the provision of the four elongated bars 8 on the lifting unit 9 it becomes possible to shift a wheel between different horizontal positions alongside a vehicle at a given vertical level by rolling a wheel from a gab between a pair of elongated bars 8 to an adjacent gab. The embodiment shown in figures 1 to 3 comprises four elongated bars and hence three intermediate gabs, but it is understood that in principle any number of bars from three upwards could be used.

The elongated bars 8 may have a uniform circumferential surface, but it is also possible to provide some or all of them with a rotatable end section 10 and/or a rubber sleeve 6, by which means the handling of wheels placed on the elongated bars 8 may be further facilitated.

### References

1 - Transport frame
2 - Motor control
3 - Handle
4 - Wheel
5 - Drive unit
6 - Rotatable end section
7 - Raising bar (7)
8 - Elongated bars
9 - Lifting unit
10 - Rubber sleeve
11 - Sliding surface

## Claims

1. Wheel lifting device for handling wheels comprising;
- a transport frame (1) comprising means for moving said wheel lifting device along a surface and wherein said transport frame further comprises a raising bar (7) mounted to said frame (1) and extending vertically upwards from said frame (1),
- a lifting unit (9) mounted to said raising bar (7) for sliding upwards and downwards along said raising bar (7), **characterised in that** the lifting unit (9) comprises at least three elongated bars (8) extending in a direction substantially perpendicular to the raising bar (7), wherein the distance between each elongated bar (8) introduces a gap for supporting a standing wheel.

2. Wheel lifting device according to claim 1, **characterised in that** the lifting unit is shaped as a fork, where said elongated bars are teeth of said fork.

3. Wheel lifting device according to claim 1 or 2, **characterised in that** at least one of said elongated bars, comprises a rotatable end section (6).

4. Wheel lifting device according to claim 1-3, **characterised in that** at least one of said elongated bars comprises a rubber sleeve (10) mounted around the bar.

5. Wheel lifting device according to claim 1, **characterised in that** said means for moving the wheel lifting device along a surface are wheels (4).

6. Wheel lifting device according to claim 1, **characterised in that** the device comprises handles (3) connected to the device whereby the device can be moved manually by pushing and pulling via the handles (3).

7. Wheel lifting device according to claim 1, **characterised in that** the device is provided with a drive unit (5) connected to the wheels and operated from a control unit (2) of the wheel lifting device.
